# EUROPEAN PATENT APPLICATION

(11) **EP 2 800 002 A1**
(43) Date of publication of application: **05.11.2014**
(21) Application number: 14165124.0
(22) Date of filing: 17.04.2014
(51) Int. Cl.: G06F 13/24

(54) **Interrupt control method and electronic system using the same**

(30) Priority: 29.04.2013 US 201361817306 P; 22.10.2013 CN 201310501008
(71) Applicant: Lite-On Semiconductor Corporation, New Taipei City 231 (TW)
(72) Inventor: Zhan, Peng-Han, 235 New Taipei City (TW)
(74) Representative: Becker Kurig Straus

(57) **Abstract**

An interrupt control method for an electronic system, the electronic system including a host and an electronic device, includes receiving digital data generated by the electronic device; determining the value of the digital data and dividing an available range of the value of the digital data into a plurality of regions; and sending an interrupt signal to the host when the value of the digital data changes from a region among the plurality of regions to another region among the plurality of regions and remains within the other region for a specific period of time.

## Description

### Field of the Invention

The present invention relates to an interrupt control method and an electronic system using the same, and more particularly, to an interrupt control method and an electronic system capable of assisting a host to receive data.

### Background of the Invention

With advancements in technology, various electronic devices such as mobile phones, GPS navigator systems, tablets, personal digital assistants (PDA) and laptops have become indispensable in our daily life. A standard electronic system comprises a core processor such as a central processing unit (CPU), a microprocessor or a micro control unit (MCU). The core processor is utilized for managing and coordinating operations of every device in the electronic system. Since most devices need the processor to perform data processing, the load on the processor is heavy. If the processor performance is poor or a large number of tasks suddenly arrive, the processor may not be able to accomplish all tasks in time, resulting in a bottleneck in system performance.

The industry has taken a lot of effort to enhance the performance of electronic systems by developing more powerful processors as well as reducing their load. If powerful dual-core or quad-core processors are utilized, costs will increase without any guarantee that the performance can be respectively doubled or quadrupled. Other methods to reduce the processor load have therefore been developed, of which one is the interrupt control method. In the interrupt control method, an interrupt signal is sent to the processor only when there is a task to be executed in a device. Upon receiving the interrupt signal, the processor allocates resources to execute said tasks. In such a situation, the processor may not need to keep detecting the operations of every device; instead, the processor only allocates resources to a specific device after receiving the interrupt signal from the device. The load on the processor will be significantly reduced. Current methods of sending interrupt signals, however, cannot effectively and accurately send interrupt signals when a task needs to be executed in the device. Thus, there is a need for improvement over the prior art.

### Summary of the Invention

The present invention aims at providing an interrupt control method and an electronic system using the same in order to solve the abovementioned problems.

This is achieved by an interrupt control method and a control unit for an electronic system according to claims 1, 6, 8, and 13. The dependent claims pertain to corresponding further developments and improvements.

As will be seen more clearly from the detailed description following below, the claimed interrupt control method is used for a control unit of an electronic system wherein the electronic system comprises a host and an electronic device. The claimed interrupt control method comprises receiving digital data generated by the electronic device; determining the value of the digital data and dividing an available range of the value of the digital data into a plurality of regions; and sending an interrupt signal to the host when the value of the digital data changes from a region among the plurality of regions to another region among the plurality of regions and remains within the other region for a specific period of time.

### Brief Description of the Drawings

FIG. 1 is a schematic diagram of a common interrupt signal sending status.
FIG. 2 is a schematic diagram of an electronic system according to an embodiment of the present invention.
FIG. 3 is a schematic diagram of region division according to an embodiment of the present invention.
FIG. 4 is a schematic diagram of an interrupt signal sending status according to an embodiment of the present invention.
FIG. 5 is a schematic diagram of an interrupt signal sending status according to another embodiment of the present invention.
FIG. 6 is a schematic diagram of an interrupt signal sending process according to an embodiment of the present invention.
FIG. 7 is a schematic diagram of an interrupt signal sending process according to another embodiment of the present invention.

### Detailed Description

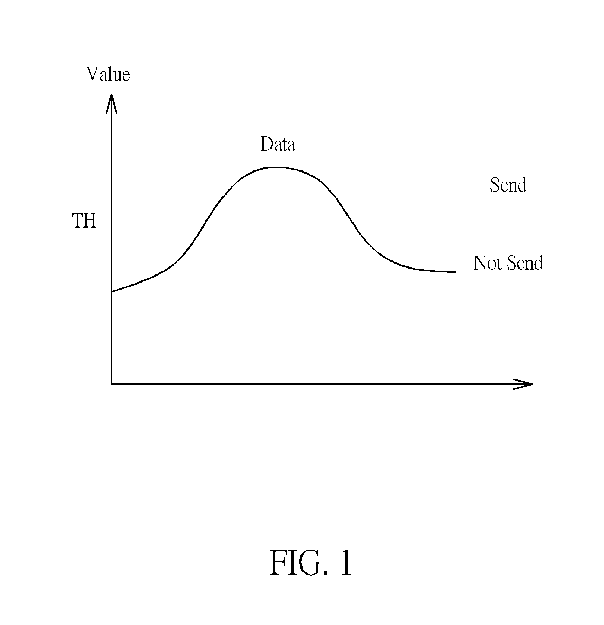

As mentioned above, current methods of sending interrupt signals cannot effectively and accurately send the interrupt signals when a task needs to be executed in the device. FIG. 1 is a schematic diagram of a common interrupt signal sending status. As shown in FIG. 1, a device may determine whether to send interrupt signals according to the value of data. When the value of the data is greater than a threshold value TH, the device may continue to send interrupt signals to inform the processor to execute the task. When the value of the data is smaller than the threshold value TH, the device may stop sending the interrupt signals, so the processor does not need to waste resources on detecting whether there are any tasks to be executed. In this interrupt signal sending policy, when the value of the data is close to the threshold value TH, noise in the system may cause the device to erroneously send interrupt signals; alternatively, an interrupt signal needs to be sent but is not sent due to this noise interference.

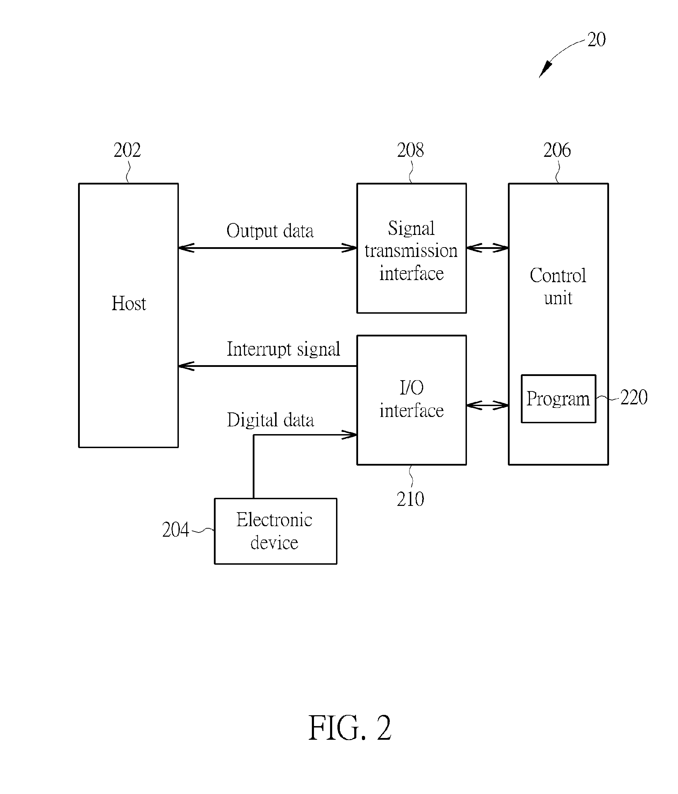

FIG. 2 is a schematic diagram of an electronic system 20 according to an embodiment of the present invention. The electronic system 20 includes a host 202, an electronic device 204, a control unit 206, a signal transmission interface 208 and an I/O interface 210. The host 202 is utilized for controlling operations of each device in the electronic system 20. In general, the host 202 may be a core processor of the electronic system 20 such as a central processing unit (CPU), a microprocessor or a micro control unit (MCU). The electronic device 204, which is a device capable of executing specific functions, is controlled by the host 202. When the electronic device 204 is operating, digital data may be generated, and these digital data may be converted into output data to be transmitted to the host 202 for follow-up processing. The control unit 206 is utilized for receiving the digital data generated by the electronic device 204 via the I/O interface 210. The control unit 206 may convert these digital data into the output data, which are then transmitted to the host 202 via the signal transmitting interface 208. The control unit 206 further sends the interrupt signals to the host 202 via the I/O interface 210. When the host 202 receives the interrupt signals, the host 202 may interrupt ongoing tasks and allocate resources to receive the output data.

It is notable that the abovementioned signal transmitting interface 208 and I/O interface 210 are utilized for performing connections and signal transmissions between each device. The implementation illustrated in FIG. 2 is only one of various embodiments. For example, the signal transmitting interface 208 and the I/O interface 210 may be realized in the electronic system 20 separately. The signal transmitting interface 208 and the I/O interface 210 may also be integrated into the control unit 206, or integrated into the host 202. The electronic system 20 may also use a transmission interface to integrate the functions of both the signal transmitting interface 208 and the I/O interface 210. In other words, the control unit 206 may be connected with other devices and signals may be transmitted via other interfaces or by other methods, which are not limited to what is described herein.

In detail, the control unit 206 may have a program 220, which is executed by a processor inside the control unit 206, in order to perform an interrupt control method. The interrupt control method of the present invention can be utilized for controlling the timing of sending the interrupt signals and preventing the interrupt signals from being sent erroneously due to noise interference, so that the host 202 can efficiently obtain the output data of the electronic device 204. This further reduces the load and enhances the efficiency of the host 202.

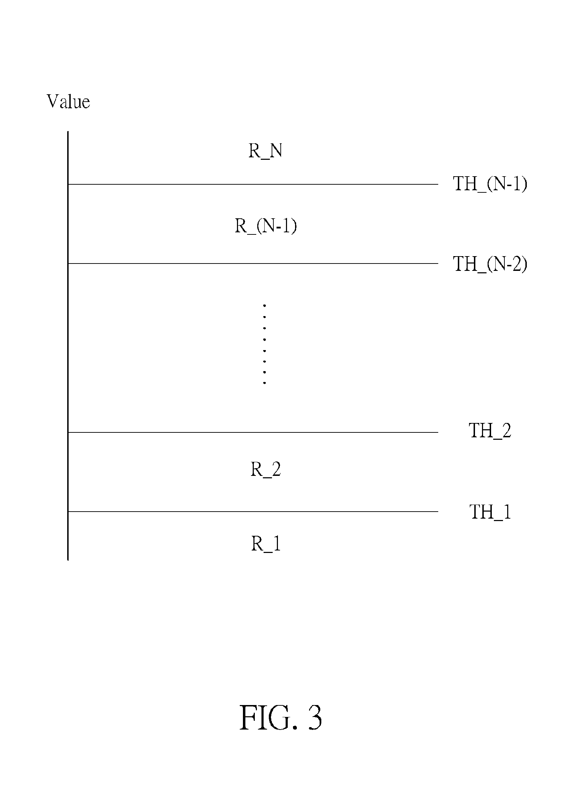

FIG. 3 is a schematic diagram of region division according to an embodiment of the present invention. As shown in FIG. 3, the control unit 206 may determine the value of the digital data and divide the available range of the value of the digital data into N regions R_1-R_N, wherein N-1 threshold values TH_1-TH_(N-1) are required for dividing N regions R_1-R_N. Via such a dividing method, the control unit 206 may send an interrupt signal to the host 202 when the value of the digital data changes and crosses different regions. For example, the value of the digital data may be located in a region R_a; when the value of the digital data increases to exceed a threshold value TH_a and enters a region R_(a+1), the control unit 206 may send an interrupt signal. Otherwise, when the value of the digital data decreases to below the threshold value TH_(a-1) and enters a region R_(a-1), the control unit 206 may also send an interrupt signal.

It is notable that the threshold value and the number of regions may be determined according to system requirements and are not limited to what is described herein. The range of each region may be equal or unequal to each other, and this should also be determined according to system requirements. In general, the main purpose of dividing the value of the digital data into a plurality of regions and sending an interrupt signal when the value crosses different regions is to notify the host 202 to receive output data when the value undergoes an evident change so that corresponding tasks have to be executed. When the value remains in the same region, the value undergoes no evident change and the host 202 does not need to waste resources on receiving the output data. The control unit 206 may set the threshold value to differentiate whether the digital data undergoes an evident change. As a result, the host 202 may efficiently obtain the output data of the electronic device 204, and thereby reduce the load of the host 202.

In some embodiments, the control unit 206 is triggered to send an interrupt signal after the value of the digital data crosses a threshold value and further remains within a region for a specific period of time, in order to prevent the control unit 206 from erroneously sending interrupt signals due to noise interference. In such embodiments, the control unit 206 does not send the interrupt signal at the time when the value of the digital data crosses the threshold value; instead, after the value of the digital data crosses the threshold value, the control unit 206 determines whether the value of the digital data remains within the same region over a subsequent period of time. For example, when the value of the digital data changes from a region R_b across a threshold value to a region R_c, the control unit 206 may start to count time and monitor the value of the digital data. If the value of the digital data remains within the region R_c over a subsequent period of time, the control unit 206 may determine that the above change of the digital data's value from the region R_b across the threshold value to the region R_c is not generated by noise interference. The control unit 206 therefore sends an interrupt signal to the host 202 in order to notify the host 202 to receive data. If the value of the digital data returns to the region R_b within a short time, the control unit 206 may determine that the above change of the digital data's value from the region R_b across the threshold value to the region R_c is generated by noise interference. The control unit 206 therefore does not send any interrupt signal to the host 202. Erroneous sending of interrupt signals due to noise interference may thereby be prevented.

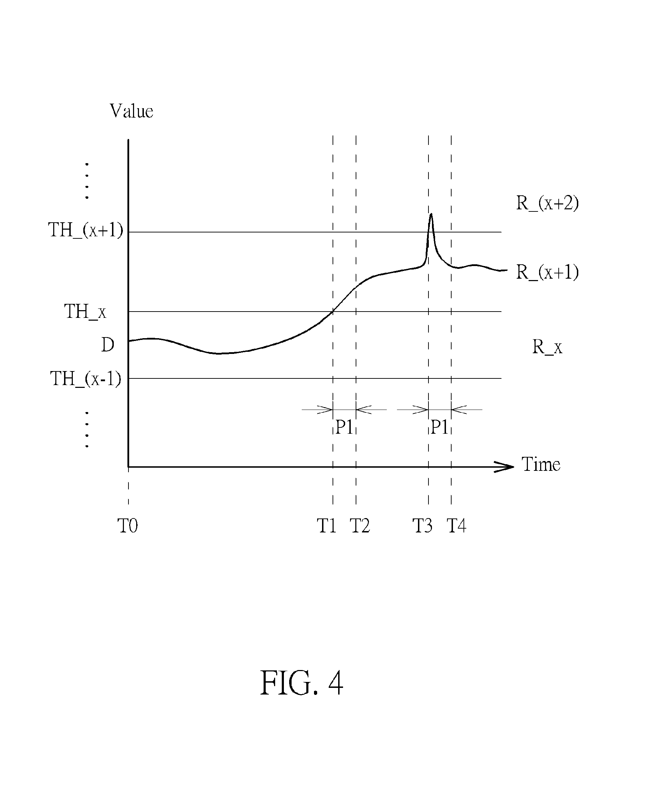

FIG. 4 is a schematic diagram of an interrupt signal sending status according to an embodiment of the present invention. As shown in FIG. 4, at time T0, the value of the digital data D is located between the threshold values TH_x and TH_(x-1), i.e. the region R_x. When the value of the digital data D crosses the threshold value TH_x and enters the region R_(x+1) (e.g. at time T1), the control unit 206 does not send any interrupt signal. At this moment, the control unit 206 may monitor whether the value of the digital data D remains within the region R_(x+1) by starting to count the time. When the time that the value remains within the region R_(x+1) is at least a specific period P1 (e.g. at time T2), the control unit 206 determines that this change across the threshold value TH_x is not triggered by noise interference, and therefore sends an interrupt signal to the host 202, in order to notify the host 202 to receive the output data.

As shown in FIG. 4, at time T3, the value of the digital data D crosses the threshold value TH_(x+1) and enters the region R_(x+2). At this moment, the control unit 206 may monitor whether the value of the digital data D remains within the region R_(x+2) by starting to count the time. The value of the digital data D returns to the region R_(x+1) within the specific period P1 (e.g. before time T4); hence the control unit 206 determines that this change across the threshold value TH_(x+1) is triggered by noise interference, and therefore does not send any interrupt signal to the host 202.

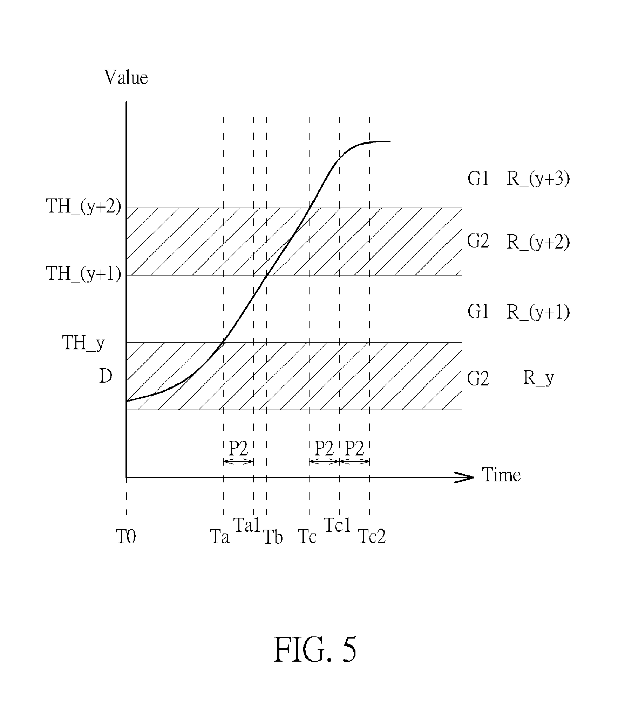

In the above embodiment, each time the value of the digital data crosses different regions, the control unit 206 may send an interrupt signal to the host 202 in order to notify the host 202 to receive the output data corresponding to the digital data, or check whether the value of the digital data remains within the destination region to determine whether to send the interrupt signal. In another embodiment, the interrupt signal sending policy may be executed by other ways. FIG. 5 is a schematic diagram of an interrupt signal sending status according to an embodiment of the present invention. As shown in FIG. 5, the available range of the value of the digital data D is divided into N regions R_1-R_N, wherein these N regions R_1-R_N are further classified into groups G1 and G2. When the value of the digital data D is located in a region of the group G1 and remains within the region for each specific period of time, the control unit 206 may send an interrupt signal to the host 202. When the value of the digital data D is located in a region of the group G2, the control unit 206 may not send any interrupt signal.

As shown in FIG. 5, regions R_(y+1) and R_(y+3) are classified into the group G1, and regions R_y and R_(y+2) are classified into the group G2. The control unit 206 may be controlled to send an interrupt signal when the value of the digital data D is located in a region of the group G1 and remains within the region for each specific period of time, and not to send any interrupt signal when the value of the digital data D is located in a region of the group G2. In detail, at time T0, the value of the digital data D is located in the region R_y, and the control unit 206 may not send any interrupt signal since the region R_y is located in the group G2. At time Ta, the value of the digital data D crosses a threshold value TH_y and enters the region R_(y+1), and the control unit 206 may start to count time since the region R_(y+1) is located in the group G1. After a specific period P2 (i.e. at time Ta1), the value of the digital data D remains within the region R_(y+1), and thus the control unit 206 may send an interrupt signal. At time Tb, the value of the digital data D crosses a threshold value TH_(y+1) and enters the region R_(y+2), and the control unit 206 may not send any interrupt signal since the region R_(y+2) is located in the group G2. At time Tc, the value of the digital data D crosses a threshold value TH_(y+2) and enters the region R_(y+3), and the control unit 206 may start to count time since the region R(y+3) is located in the group G1. After a specific period P2 (i.e. at time Tc1), the value of the digital data D remains within the region R_(y+3), and thus the control unit 206 may send an interrupt signal. Then, after another specific period P2 (i.e. at time Tc2), the value of the digital data D is still within the region R_(y+3), and thus the control unit 206 may send an interrupt signal. It is notable that the control unit 206 may continuously send an interrupt signal in every specific period P2 until the value of the digital data D leaves the region R_(y+3).

In this embodiment, the division of N regions R_1-R_N is similar to the embodiment in FIG. 4, but the regions R_1-R_N may further be classified into the groups G1 and G2. When the value of the digital data D crosses a threshold value to enter a region of the group G1 or keeps located in a region of the group G1, the control unit 206 may send an interrupt signal in each specific period of time. When the value of the digital data D crosses a threshold value to enter a region of the group G2 or keeps located in a region of the group G2, the control unit 206 may not send any interrupt signal. In such a situation, the control unit 206 may be controlled to send interrupt signals only when the host 202 needs to receive data by properly classifying the regions R_1-R_N into the groups G1 or G2. Redundant interrupt signals will not be sent by the control unit 206, so that the host 202 does not need to waste resources on receiving unnecessary data.

It is noticeable that the regions R_1-R_N mentioned above may be classified into the groups G1 and G2 by any methods, and these may be determined according to system requirements. In another embodiment, the control unit 206 may be controlled not to send any interrupt signal when the value of the digital data D enters a region located in the group G1 and to send an interrupt signal when the digital data D enters a region located in the group G2 and remains within the region, wherein the classification method may be determined according to system requirements; this is not limited to what is described herein. As mentioned above, the purpose of sending interrupt signals to the host 202 is to notify the host 202 to receive the output data of the electronic device 204. In general, the host 202 may not need to be notified when the value of the digital data D enters each region; instead, only when the value of the digital data D enters some specific regions should the host 202 be notified to receive the output data. These specific regions can therefore be classified into the group G1, and other regions are classified into the group G2. Via such a classification method, the determination of regions will be more flexible and can also be adapted to different requirements of sending interrupt signals. For example, if the frequency of sending interrupt signals needs to be reduced, more regions may be classified into the group G2 and fewer regions may be classified into the group G1. The control unit 206 sends an interrupt signal only when the value of the digital data D enters a region of the group G1 or keeps located in a region of the group G1. As a result, the system may be adaptive to various interrupt signal sending requirements without changing the method for region division.

The above method of sending interrupt signals based on region classification may also be immune to erroneous sending due to noise interference. For example, in FIG. 5, the control unit 206 may not send the interrupt signal at the time Ta or Tc; instead, it may keep monitoring whether the value of the digital data D continuously remains within the regions R_(y+1) and R_(y+3) when acknowledging that the value of the digital data D crosses the threshold values TH_y and TH_(y+2) and enters the regions R_(y+1) and R_(y+3) at the time Ta and Tc respectively. After determining that the change of the digital data's value is not generated by noise interference at the time Ta1 or Tc1, the control unit 206 then sends an interrupt signal to the host 202.

It is notable that the control unit of the present invention is capable of accurately sending the interrupt signals to the host while preventing noise interference from causing the interrupt signals to be sent erroneously. Those skilled in the art can make modifications and alternations accordingly. For example, the abovementioned threshold values TH_1-TH_(N-1) may be defined as proper values according to system requirements, which allows the control unit 206 to send interrupt signals to the host 202 only when the value of the digital data D meets sending requirements. The length of the specific period P1 or P2 may also be set to a proper value, so that the control unit 206 may determine whether the change of the digital data's value is generated by noise interference or actual change of the value, in order to accurately send the interrupt signal. The electronic device 204 may be any devices in the electronic system 20 that can be controlled by the host 202, which should not be limited to particular types or those devices which have particular functions. In other words, any peripheral devices managed by the host 202 may utilize the abovementioned methods of sending interrupt signals to prevent noise interference from causing the signals to be sent erroneously. Therefore, the host 202 may not need to keep detecting operations of every device; instead, the host 202 may allocate resources to process tasks in the specific device only when receiving the interrupt signals.

For example, in an embodiment, the electronic device 204 may be a light sensor, and the digital data may be related to a sensing result of ambient light. The host 202 may not need to keep receiving the data sensed by the light sensor; instead, after the light sensor obtains the sensing result, the sensing result is transmitted to the control unit 206. The control unit 206 then determines when to start sending the interrupt signals according to the value of the sensing result, e.g. defining an effective sensing result to be a change across a threshold value TH_z to a region R_z and remaining within the region R_z for a specific period P3. When the effective sensing result is detected, the control unit 206 may start to send the interrupt signal to the host 202, in order to notify the host 202 to receive data.

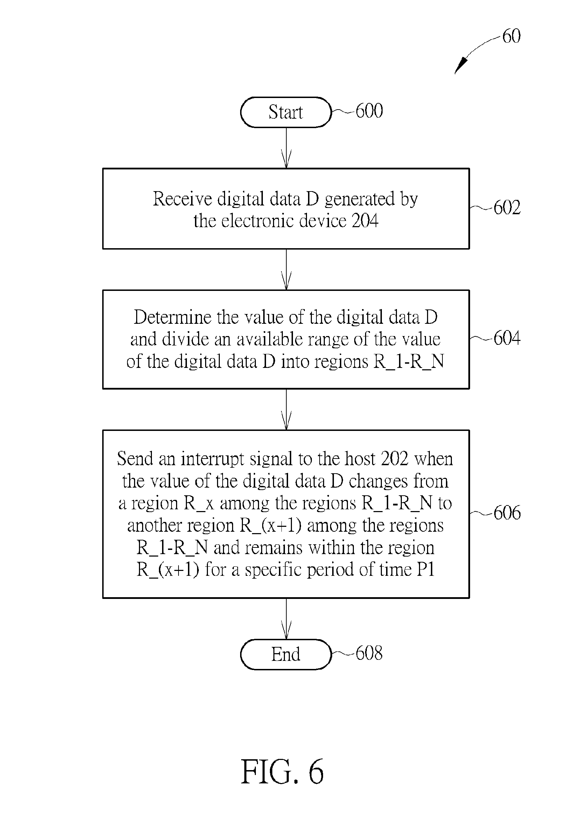

The above operations related to the method of sending interrupt signals can be summarized into an interrupt signal sending process 60, as shown in FIG. 6. The interrupt signal sending process 60, which can be compiled into the program 220 to be executed by the processor in the control unit 206, includes the following steps:

| | |
|---|---|
| Step 600: | Start. |
| Step 602: | Receive digital data D generated by the electronic device 204. |
| Step 604: | Determine the value of the digital data D and divide an available range of the value of the digital data D into regions R_1-R_N. |
| Step 606: | Send an interrupt signal to the host 202 when the value of the digital data D changes from a region R_x among the regions R_1-R_N to another region R_(x+1) among the regions R_1-R_N and remains within the region R_(x+1) for a specific period of time P1. |
| Step 608: | End. |

The operations and variations of the interrupt signal sending process 60 have been detailed above, and will not be narrated hereafter.

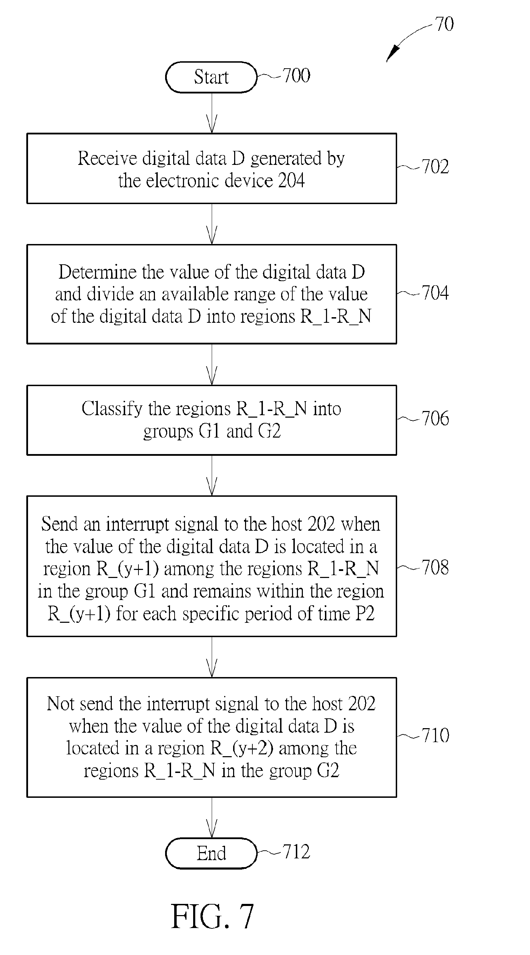

In another embodiment, the regions R_1-R_N may further be divided into the groups G1 and G2. Detailed operations related to the method of sending interrupt signals based on region classification can be summarized into another interrupt signal sending process 70, as shown in FIG. 7. The interrupt signal sending process 70, which can also be compiled into the program 220 to be executed by the processor in the control unit 206, includes the following steps:

| | |
|---|---|
| Step 700: | Start. |
| Step 702: | Receive digital data D generated by the electronic device 204. |
| Step 704: | Determine the value of the digital data D and divide an available range of the value of the digital data D into regions R_1-R_N. |
| Step 706: | Classify the regions R_1-R_N into groups G1 and G2. |
| Step 708: | Send an interrupt signal to the host 202 when the value of the digital data D is located in a region R_(y+1) among the regions R_1-R_N in the group G1 and remains within the region R_(y+1) for each specific period of time P2. |
| Step 710: | Not send the interrupt signal to the host 202 when the value of the digital data D is located in a region R_(y+2) among the regions R_1-R_N in the group G2. |
| Step 712: | End. |

The operations and variations of the interrupt signal sending process 70 have been detailed above, and will not be narrated hereafter.

In the prior art, conventional methods of sending interrupt signals cannot effectively and accurately send interrupt signals when a task needs to be executed in the device. If noise occurs, the noise may cause the device to erroneously send interrupt signals, or an interrupt signal may need to be sent but is not sent due to the noise interference. In comparison, the interrupt control method and electronic system of the present invention applies region division to send an interrupt signal when the value of the digital data undergoes evident change across different regions or keeps within specific regions. This method is able to effectively and accurately send the interrupt signals so that efficiency of the host is enhanced.

## Claims

1. An interrupt control method for a control unit (206) of an electronic system (20) **characterized by** the electronic system comprising a host (202) and an electronic device (204), the interrupt control method comprising the following steps carried out by the control unit (206):
receiving digital data (D) generated by the electronic device (204);
determining the value of the digital data (D) and dividing an available range of the value of the digital data (D) into a plurality of regions (R_1-R_N); and
sending an interrupt signal to the host (202) when the value of the digital data (D) changes from a region among the plurality of regions (R_1-R_N) to another region among the plurality of regions (R_1-R_N) and remains within the other region for a specific period of time.

2. The method of claim 1, **characterized in that** the interrupt signal controls the host (202) to interrupt an ongoing task in order to allow the host (202) to receive an output data corresponding to the digital data (D).

3. The method of claim 1, **characterized in that** the electronic device (204) is a light sensor and the digital data (D) corresponds to a sensing result of ambient light.

4. The method of claim 1, **characterized by** not sending the interrupt signal to the host (202) when the value of the digital data (D) changes from the region to the other region and returns to the region within the specific period of time.

5. The method of claim 1, **characterized by** not sending the interrupt signal to the host (202) when the value of the digital data (D) is within the region and does not change to another region.

6. A control unit (206) capable of carrying out any of the interrupt control methods according to any one of claims 1-5.

7. An electronic system (20) comprising the control unit (206) according to claim 6.

8. An interrupt control method for a control unit (206) of an electronic system (20), **characterized by** the electronic system comprising a host (202) and an electronic device (204), the interrupt control method comprising the following steps carried out by the control unit (206):
receiving digital data (D) generated by the electronic device (204);
determining the value of the digital data (D) and dividing an available range of the value of the digital data (D) into a plurality of regions (R_1-R_N);
classifying the plurality of regions (R_1-R_N) into a group (G1) and another group (G2);
sending an interrupt signal to the host (202) when the value of the digital data (D) is located in a region among the plurality of regions (R_1-R_N) in the group (G1) and remains within the region for each specific period of time; and
not sending the interrupt signal to the host (202) when the value of the digital data (D) is located in another region among the plurality of regions (R_1-R_N) in the other group (G2).

9. The method of claim 8, **characterized in that** the interrupt signal controls the host (202) to interrupt an ongoing task in order to allow the host (202) to receive an output data corresponding to the digital data (D).

10. The method of claim 8, **characterized in that** the electronic device (204) is a light sensor and the digital data (D) corresponds to a sensing result of ambient light.

11. The method of claim 8, **characterized by** not sending the interrupt signal to the host (202) when the value of the digital data (D) changes from the other region to the region and returns to the other region within the specific period of time.

12. The method of claim 8, **characterized by** sending the interrupt signal to the host (202) when the value of the digital data (D) changes from the other region to the region and remains within the region for the specific period of time.

13. A control unit (206) capable of carrying out any of the interrupt control methods according to any one of claims 8-12.

14. An electronic system (20) comprising the control unit (206) according to claim 13.
